# EUROPEAN PATENT APPLICATION

(11) **EP 4 339 595 A1**
(43) Date of publication of application: **20.03.2024**
(21) Application number: 22807099.1
(22) Date of filing: 01.03.2022
(51) Int. Cl.: G01N 21/31, G01J 1/02

(54) **FLAME ATOMIC ABSORPTION SPECTROPHOTOMETER**

(30) Priority: 13.05.2021 JP 2021081877
(71) Applicant: Shimadzu Corporation, Nakagyo-ku, Kyoto-shi, Kyoto 604-8511 (JP)
(72) Inventor: SUGIHARA, Kazuo, Kyoto-shi, Kyoto 604-8511 (JP)
(74) Representative: Müller-Boré & Partner Patentanwälte PartG mbB
(86) International application number: PCT/JP2022/008679
(87) International publication number: WO 2022/239392

(57) **Abstract**

Provided is a flame atomic absorption spectrophotometer capable of avoiding inaccurate quantitative analysis without imposing a burden on a measurer. A flame atomic absorption spectrophotometer (1) includes: a flame generation unit configured to generate flame by combusting mixed gas of a sample and combustion gas; a burner head (124) having a slit-shaped opening (slit (125)) from which the flame blows out; a light source (11) configured to emit measurement light having a wavelength band including a predetermined wavelength through a longitudinal path in plate-shaped flame (92) blowing out from the opening; a measurement unit (detector (14)) configured to measure intensity of measurement light (913) that has passed through the plate-shaped flame; and an image capturing unit (camera (15)) configured to capture an image of one side surface of the plate-shaped flame.

## Description

### TECHNICAL FIELD

The present invention relates to a flame atomic absorption spectrophotometer.

### BACKGROUND ART

A flame atomic absorption spectrophotometer nebulizes solution containing metal elements, mixes the nebulized solution into combustion gas (for example, gas obtained by mixing acetylene gas with oxygen or air), and burns the mixture, thereby atomizing the metal elements in a sample. At this time of burning, the flame is forced to come out from a slit-shaped opening, so that the flame is shaped plate-like (see Patent Literature 1). Measurement light having a predetermined wavelength corresponding to an atom to be measured is passed through the longitudinal path in the plate-shaped flame, and the intensity of the measurement light having passed through the flame is measured to obtain the absorbance. The absorbance is divided by the distance by which the measurement light passes through the flame, and the value (quotient) thus obtained is applied to a calibration curve obtained in a preliminary experiment to quantify the atom to be measured.

### CITATION LIST

### PATENT LITERATURE

Patent Literature 1: JP H10-160667 A

### SUMMARY OF INVENTION

### TECHNICAL PROBLEM

When impurities are contained in the solution, clogging may occur in a part of the slit, thereby making a gap in the plate-shaped flame. In the flame atomic absorption spectrophotometer described in Patent Literature 1, the clogging of the slit is prevented by mirror-polishing the inner surface of the slit, but it is still difficult to completely prevent clogging of the slit and creation of a gap in the flame due to clogging. When such a gap is created in a plate-shaped flame, measurement conditions (such as the distance by which the measurement light passes through the flame, the temperature, or the like) changes from those in the preliminary experiment, so that accurate quantitative analysis cannot be performed. Therefore, conventionally, in order to confirm that an inaccurate quantitative analysis is not being performed, a measurer has to continuously monitor the state of flame during a measurement.

A problem to be solved by the present invention is to provide a flame atomic absorption spectrophotometer capable of avoiding inaccurate quantitative analysis without imposing a burden on a measurer.

### SOLUTION TO PROBLEM

A flame atomic absorption spectrophotometer according to the present invention made to solve the above problem includes:
a flame generation unit configured to generate flame by combusting mixed gas of a sample and combustion gas;
a burner head having a slit-shaped opening from which the flame blows out;
a light source configured to emit measurement light having a wavelength band including a predetermined wavelength through a longitudinal path in plate-shaped flame blowing out from the opening;
a measurement unit configured to measure intensity of measurement light that has passed through the plate-shaped flame; and
an image capturing unit configured to capture an image of a side surface of the plate-shaped flame.

### ADVANTAGEOUS EFFECTS OF INVENTION

With the flame atomic absorption spectrophotometer according to the present invention, since the image capturing unit captures an image of a side surface of the flame, the state of flame can be monitored with the image, and therefore, it is possible to avoid inaccurate quantitative analysis without putting a burden of monitoring on a measurer.

### BRIEF DESCRIPTION OF DRAWINGS

[Fig. 1] Fig. 1 is a schematic configuration diagram illustrating an embodiment of a flame atomic absorption spectrophotometer according to the present invention.
[Fig. 2] Fig. 2 is a diagram illustrating an example of a state where plate-shaped flame without a gap blows out from a slit of a burner head in the flame atomic absorption spectrophotometer of the present embodiment.
[Fig. 3] Fig. 3 is a diagram illustrating an example of a state where plate-shaped flame with a gap blows out from a slit of a burner head in the flame atomic absorption spectrophotometer of the present embodiment.
[Fig. 4] Fig. 4 is a flowchart illustrating an operation of the flame atomic absorption spectrophotometer of the present embodiment.

### DESCRIPTION OF EMBODIMENTS

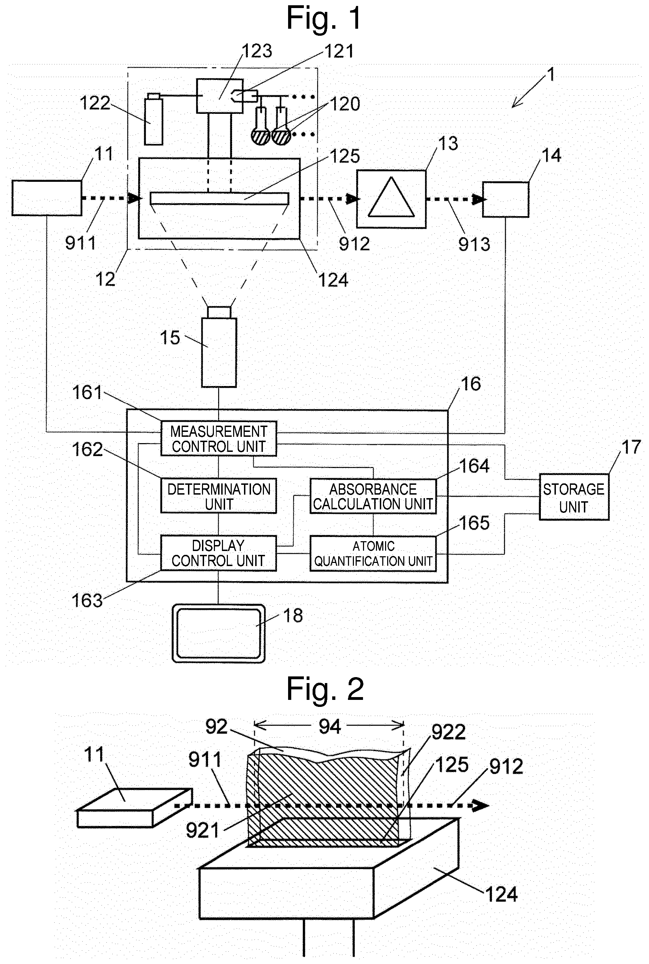

An embodiment of a flame atomic absorption spectrophotometer according to the present invention will be described with reference to Figs. 1 to 4.

### (1) Configuration of Flame Atomic Absorption Spectrophotometer of Present Embodiment

Fig. 1 is a schematic configuration diagram illustrating a flame atomic absorption spectrophotometer 1 of the present embodiment. The flame atomic absorption spectrophotometer 1 includes a light source 11, an atomization unit 12, a spectroscope 13, a detector (measurement unit) 14, a camera (image capturing unit) 15, a control unit 16, and a storage unit 17. The atomization unit 12 includes a sample accommodation unit 120, a sample nebulizer 121, a combustion gas source 122, a burner chamber 123, and a burner head 124, and a slit 125 is provided on an upper surface of the burner head 124. In Fig. 1, among the respective components, the light source 11, the burner head 124 (including the slit 125), the spectroscope 13, the detector 14, and the camera 15 indicate a mutual positional relationship as viewed from above.

The light source 11 emits measurement light 911 having a wavelength band including a predetermined wavelength. Here, the "predetermined wavelength" is a wavelength of light absorbed by an atom to be measured, and is determined by a type of the atom to be measured. For example, the predetermined wavelength is 283.3 nm when the atom to be measured is Pb (lead), 228.8 nm when the atom is Cd (cadmium), and 324.8 nm when the atom is Cu (copper). The atom to be measured is an atom that is known to be contained in the sample, an atom that may be contained in the sample but whether it is contained is unknown, an atom that should not be essentially detected like an atom contained in a harmful substance, and the like. The "measurement light having a wavelength band including a predetermined wavelength" may be monochromatic light having only the predetermined wavelength, or may be light having a wavelength band with a certain width including the predetermined wavelength.

Each component of the atomization unit 12 will be described. The sample accommodation unit 120 is a container that accommodates a sample of solution containing a metal element and capable of sorting a plurality of samples to accommodate them. The sample nebulizer 121 selects one of the plurality of samples in the sample accommodation unit 120, draws up the sample, and nebulizes the sample into the burner chamber 123. The combustion gas source 122 supplies combustion gas obtained by mixing acetylene and oxygen into the burner chamber 123. The burner chamber 123 generates mixed gas obtained by mixing the atomized sample nebulized from the sample nebulizer 121 and the combustion gas supplied from the combustion gas source 122, and then burns the mixed gas. A combination of the sample nebulizer 121, the combustion gas source 122, and the burner chamber 123 corresponds to the flame generation unit described above. The burner head 124 injects the flame of the mixed gas combusting in the burner chamber 123 upward from the slit (opening) 125. When there is no abnormality in the burner head 124, plate-shaped flame 92 blows out from the slit 125 as illustrated in Fig. 2. The positional relationship between the light source 11 and the burner head 124 is set such that the measurement light 911 from the light source 11 is emitted to the flame 92 in the longitudinal direction of the plate-shaped flame 92.

The spectroscope 13 disperses measurement light 912 that has passed through the flame 92. The positional relationship among the burner head 124, the spectroscope 13, and the detector 14 is set such that light 913 having the predetermined wavelength among the measurement light 912 having passed through the plate-shaped flame 92 is dispersed by the spectroscope 13 and enters the detector 14. The detector 14 corresponds to the measurement unit descried above, detects the light 913, which is incident on the detector 14 and has the predetermined wavelength, and transmits a detection signal to the control unit 16.

The camera 15 corresponds to the image capturing unit described above, and its orientation is set so as to capture an image of one side surface 921 (hatched surface in Fig. 2) of the plate-shaped flame 92 blowing out from the slit 125 of the burner head 124. Note that the "side surface" of the plate-shaped flame refers to two surfaces (usually, the widest two surfaces among the surfaces of the plate) facing each other in the thickness direction of the plate, and is different from end surfaces 922. The camera 15 may capture an image of the one side surface 921 of the plate-shaped flame 92 from right in front (from a direction perpendicular to the side surface 921) or from an oblique direction with respect to the side surface 921.

The control unit 16 includes a measurement control unit 161, a determination unit 162, a display control unit 163, an absorbance calculation unit 164, and an atomic quantification unit 165. The control unit 16 is actually embodied by hardware such as a central processing unit and software for performing various control processes.

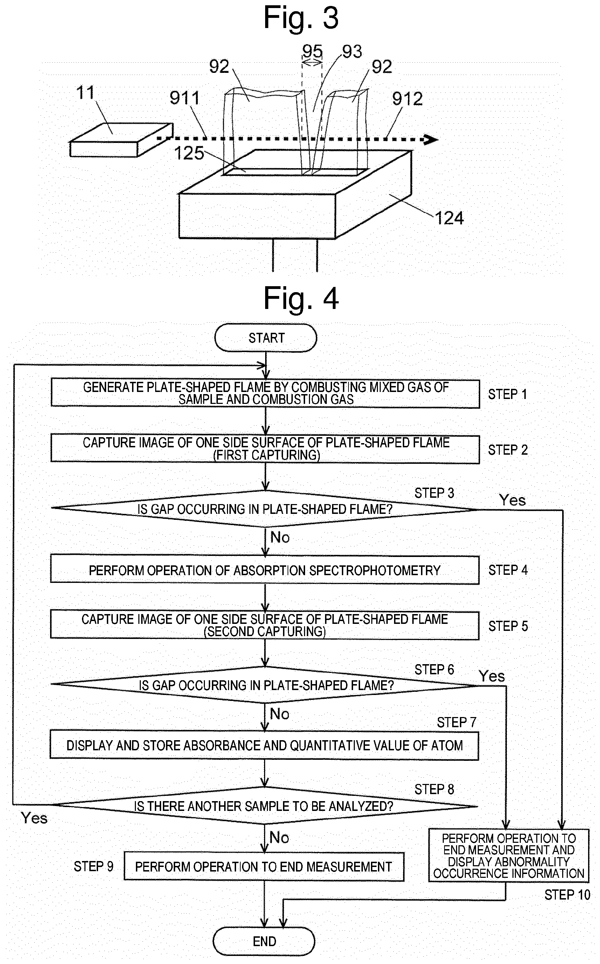

Each part in the control unit 16 will be described in detail as follows. The measurement control unit 161 controls the operation of each component included in the flame atomic absorption spectrophotometer 1. The control performed by the measurement control unit 161 includes control of performing an operation of stopping the measurement when the determination unit 162 determines that a gap 93 (see Fig. 3, detailed later) has occurred in the plate-shaped flame 92. The determination unit 162 acquires an image captured by the camera 15, and determines whether the gap 93 occurs in the plate-shaped flame 92 on the basis of the image. The display control unit 163 performs control to cause a display unit 18 to display characters, images, and the like. The control performed by the display control unit 163 includes control of performing a predetermined display on the display unit 18 when the determination unit 162 determines that the gap 93 has occurred in the plate-shaped flame 92 as described later. The absorbance calculation unit 164 calculates the absorbance on the basis of the detection intensity of light having a predetermined wavelength indicated by the output signal from the detector 14. The atomic quantification unit 165 performs an operation of quantifying an atom to be analyzed on the basis of the absorbance calculated by the absorbance calculation unit 164 and a calibration curve stored in the storage unit 17.

The storage unit 17 stores various data obtained at the time of measurement and data of a calibration curve to be used at the time of performing quantification by the atomic quantification unit 165. The various data include image data of the plate-shaped flame 92 captured by the camera 15 during the measurement.

The display unit 18 displays a setting screen of measurement conditions, a screen indicating a measurement result. In addition, the display unit 18 performs predetermined display when the determination unit 162 determines that a gap has occurred in the plate-shaped flame 92 as described later. Note that the display unit 18 and the display control unit 163 correspond to a notification unit described later.

In addition, the flame atomic absorption spectrophotometer 1 includes an input unit (not illustrated) to which a user inputs measurement conditions or the like.

### (2) Operation of Flame Atomic Absorption Spectrophotometer of Present Embodiment

An operation of the flame atomic absorption spectrophotometer 1 of the present embodiment will be described with reference to Fig. 4.

One or a plurality of samples of solutions containing (or possibly containing) metal elements are prepared and stored in the sample accommodation unit 120 in advance. Hereinafter, a case where a plurality of samples are prepared will be described as an example.

When the user performs a predetermined measurement start operation using the input unit, the sample nebulizer 121 draws up one of the plurality of samples stored in the sample accommodation unit 120 and nebulizes the sample into the burner chamber 123. At the same time, the combustion gas source 122 supplies combustion gas obtained by mixing acetylene and oxygen into the burner chamber 123. As a result, a mixed gas in which the nebulized sample and the combustion gas are mixed is generated. Subsequently, the burner chamber 123 ignites the mixed gas with an ignition device (not illustrated), thereby burning the mixed gas. As a result, the plate-shaped flame 92 blows out from the slit 125 of the burner head 124 (step 1).

Next, the camera 15 captures an image of the one side surface 921 of the plate-shaped flame 92 (step 2: first capturing), and transmits data of the obtained image to the measurement control unit 161. The measurement control unit 161 transmits image data to each of the determination unit 162 and the storage unit 17. The determination unit 162 performs determination described next and the storage unit 17 stores image data. Note that the image data is stored in the storage unit 17 to preserve evidence that the measurement was performed in a normal state of the plate-shaped flame 92.

On the basis of the received image data, the determination unit 162 determines whether the gap 93 is occurring in the plate-shaped flame 92, by a general image analysis method (step 3). When the burner head 124 is in a normal state, an image of the plate-shaped flame 92 having a uniform side surface is obtained as illustrated in Fig. 2. In contrast, when an abnormality, for example, clogging of the slit 125 of the burner head 124 with a foreign matter, has occurred, an image of the plate-shaped flame 92 having the gap 93 is obtained as illustrated in Fig. 3.

When the determination unit 162 determines that the gap 93 is occurring in the plate-shaped flame 92 (Yes in step 3), the following two operations are performed simultaneously or one by one in order as step 10. As the first operation, the measurement control unit 161 ends (stops) the measurement by performing control to stop nebulizing the sample from the sample nebulizer 121 and supplying the combustion gas from the combustion gas source 122 (step 10). As the second operation, the display control unit 163 causes the display unit 18 to display characters, images, and the like indicating abnormality occurrence information such as an indication that the measurement has been stopped due to an abnormality and an indication that recommends maintenance of the burner head 124. Then, the operation of the entire measurement is ended.

When the determination unit 162 determines that the gap 93 is not occurring in the plate-shaped flame 92 (No in step 3), an operation of absorption spectrophotometry is performed as step 4 as follows. The light source 11 emits the measurement light 911 in parallel to the plate-shaped flame 92. The spectroscope 13 disperses the measurement light 912 that has passed through the plate-shaped flame 92. The detector 14 detects light of a predetermined wavelength dispersed by the spectroscope 13, that is, light of a wavelength absorbed by the atom to be analyzed, for a predetermined time (usually several seconds). The detector 14 transmits the detection signal to the measurement control unit 161 over the entire predetermined time, and the measurement control unit 161 transmits the received detection signal to the absorbance calculation unit 164. The absorbance calculation unit 164 obtains the intensity of the light having the predetermined wavelength from a value obtained by integrating the intensities of the received detection signals for the predetermined time, and further calculates the absorbance of the light having the predetermined wavelength. The atomic quantification unit 165 applies a value obtained by dividing the absorbance calculated by the absorbance calculation unit 164 by a length 94 (this value is known) of the plate-shaped flame 92 in the longitudinal direction to the data of the calibration curve stored in the storage unit 17, thereby quantifying the atom to be analyzed contained in the sample.

After the operation of absorption spectrophotometry is performed as described above, the camera 15 captures an image of the one side surface of the plate-shaped flame 92 (step 5: second capturing), and transmits data of the obtained image to the measurement control unit 161. The measurement control unit 161 transmits image data to each of the determination unit 162 and the storage unit 17. The determination unit 162 determines whether the gap 93 is occurring in the plate-shaped flame 92, by the same method as in the first capturing (step 6).

When the determination unit 162 determines that the gap 93 is occurring in the plate-shaped flame 92 (Yes in step 6), the measurement is ended (stopped) after performing the same operation of step 10 described above.

Whereas, when the determination unit 162 determines that the gap 93 is not occurring in the plate-shaped flame 92 (No in step 6), the absorbance calculation unit 164 transmits the value of the absorbance to the display control unit 163 and the storage unit 17, and the atomic quantification unit 165 transmits a quantitative value of the atom to be analyzed to the display control unit 163 and the storage unit 17. The display control unit 163 performs control to display the absorbance value and the quantitative value of the atom to be analyzed on the display unit 18, and the storage unit 17 stores these values (step 7). Thereafter, when there is another sample to be analyzed (Yes in step 8), the process returns to step 1 and the series of operations described above is performed again. Whereas, when there is no other sample to be analyzed (No in step 8), the measurement control unit 161 performs control to stop nebulizing the sample from the sample nebulizer 121 and supplying the combustion gas from the combustion gas source 122 (step 9) to end the series of operations for the measurement.

The flame atomic absorption spectrophotometer 1 according to the present embodiment determines whether the gap 93 is occurring in the plate-shaped flame 92 twice at the start and the end of the measurement of the absorbance for one sample. The flame atomic absorption spectrophotometer 1 stops the measurement when the gap 93 is occurring and acquires the absorbance and the quantitative value of the atom (to store the values in storage unit 17 and display them on display unit 18) only when the gap 93 is not occurring at both determinations. The measurement of the absorbance for one sample is normally completed in several seconds and once the gap 93 occurs because of clogging by impurities or other reason, in general, the gap does not disappear immediately. Therefore, if it is confirmed that the gap 93 is not occurring at both of the start and the end of the measurement as in the present embodiment, it can be considered that the gap 93 has not occurred during the measurement.

If the measurement is performed while the gap 93 is occurring in the plate-shaped flame 92, there is a portion (a portion denoted by reference numeral 95 in Fig. 3) where no flame is present on the optical path when the measurement light 911 passes through a longitudinal path in the plate-shaped flame 92, and thus, a distance by which the measurement light 911 passes through the flame, a temperature, and the like change, so that the analysis becomes inaccurate. However, with the flame atomic absorption spectrophotometer 1 according to the present embodiment, by confirming that the gap 93 is not occurring at both the start and the end of the measurement, it can be considered that the gap 93 has not occurred during the measurement, and therefore, the accuracy of the analysis can be secured even if the measurer is not monitoring the state of flame.

### (Modifications)

The present invention is not limited to the above embodiments, and various variations are possible.

For example, in the embodiment above, the capturing of an image and the determination whether the gap 93 occurs are performed twice at the start and the end of the measurement for one sample, but these capturing and determination may be performed three or more times during the measurement for one sample. Alternatively, without specifying the number of times of the capturing and the determination, the capturing and the determination may be performed every predetermined time. Incidentally, when measurement time for one sample is sufficiently short, these capturing and determination may be performed only once for one sample. The camera 15 may capture a still image or may shoot a moving image. When a moving image is being shot, determination may be performed using a still image that is one frame in the obtained moving image, or determination may be performed using the moving image as it is.

In the above embodiment, the image data of the captured image is stored in the storage unit 17. The image thus stored is evidence that the measurement was performed with a normal state of the plate-shaped flame 92 as described above. However, in the present embodiment, the measurement is stopped when the gap 93 occurs in the plate-shaped flame 92. Therefore, when the measurement is performed, it is determined that the plate-shaped flame 92 was surely in a normal state, whereby the storage of the image data in the storage unit 17 may be omitted.

In the above embodiment, when the gap 93 occurs in the plate-shaped flame 92, the display unit 18 displays the abnormality occurrence information, but instead, an alarm may sound or an indicator lamp indicating an abnormality may turn on. Incidentally, the configuration for notifying a user of the abnormality occurrence information may be omitted.

Alternatively, the determination unit 162 may be omitted, and verification may be performed afterwards as follows. In this case, after all the measurements have completed, whether the gap 93 was present in the plate-shaped flame 92 is determined through checking the images obtained during the measurement, by image analysis or by a human visually confirming the images with the naked eyes. Then, the data obtained when the gap 93 was occurring is discarded as being inaccurate.

### [Modes]

It will be understood by those skilled in the art that the exemplary embodiments described above are specific examples of the following modes.

### (Clause 1)

A flame atomic absorption spectrophotometer according to Clause 1 includes:
a flame generation unit configured to generate flame by combusting mixed gas of a sample and combustion gas;
a burner head having a slit-shaped opening from which the flame blows out;
a light source configured to emit measurement light having a wavelength band including a predetermined wavelength through a longitudinal path in plate-shaped flame blowing out from the opening;
a measurement unit configured to measure intensity of measurement light that has passed through the plate-shaped flame; and
an image capturing unit configured to capture an image of one side surface of the plate-shaped flame.

The aforementioned "predetermined wavelength" is a wavelength of light absorbed by an atom to be measured (an atom that is known to be contained in the sample, an atom that may be contained in the sample, an atom that should not be essentially detected like an atom contained in a harmful substance, and the like), being determined by the type of the atom. For example, the predetermined wavelength is 283.3 nm when the atom to be measured is Pb (lead), 228.8 nm when the atom is Cd (cadmium), and 324.8 nm when the atom is Cu (copper). The aforementioned "measurement light having a wavelength band including a predetermined wavelength" may be monochromatic light having only the predetermined wavelength, or may be light having a wavelength band with a certain width including the predetermined wavelength.

In the flame atomic absorption spectrophotometer according to Clause 1, at the time of measurement, an image of one surface of the plate-shaped flame (any one of front and back surfaces when the flame is considered as a plate), blowing out from the slit-shaped opening of the burner head, is captured by the image capturing unit. The image capturing unit may capture an image of the one surface of the plate-shaped flame from right in front or from an oblique direction. If no gap occurs in the plate-shaped flame in the captured image, it means that quantitative analysis is performed in a normal state of the flame. If a gap occurs in the plate-shaped flame in the image, it means that inaccurate quantitative analysis is performed. The evaluation of the captured images may be performed by image analysis during the measurement by the measurement unit (see Clause 2) or, after the captured images are stored in the storage unit, the evaluation of the captured images may be performed afterwards by image analysis or by a human judging with the naked eyes.

With the flame atomic absorption spectrophotometer according to Clause 1, since the image capturing unit captures the image of the flame, it is possible to avoid inaccurate quantitative analysis without putting a burden due to the continuation of monitoring the state of flame on a measurer.

### (Clause 2)

A flame atomic absorption spectrophotometer according to Clause 2 is the flame atomic absorption spectrophotometer according to Clause 1, further including:
a determination unit configured to acquire an image captured by the image capturing unit during measurement by the measurement unit and determine whether a gap occurs in the plate-shaped flame on the basis of the image; and
a measurement control unit configured to perform an operation of stopping the measurement by the measurement unit when the determination unit determines that a gap occurs in the plate-shaped flame.

With the flame atomic absorption spectrophotometer according to Clause 2, during the measurement by the measurement unit, whether a gap occurs in the plate-shaped flame is determined on the basis of the image captured by the image capturing unit, and the measurement is stopped when it is determined that the gap occurs. As a result, it is possible to prevent useless measurement from being continued in a state where accurate quantitative analysis cannot be performed, and therefore, the sample and the time required for the measurement can be prevented from being wastefully consumed.

### (Clause 3)

A flame atomic absorption spectrophotometer according to Clause 3 is the flame atomic absorption spectrophotometer according to Clause 2, further including a notification unit configured to notify a user of predetermined information when the determination unit determines that a gap occurs in the plate-shaped flame.

With the flame atomic absorption spectrophotometer according to Clause 3, since the user is notified of predetermined information when the gap is occurring in the plate-shaped flame, the user can know that the measurement has been stopped because of the occurrence of the gap. Therefore, measures for resuming the measurement can be taken early. The notice of the predetermined information, for example, indicating that the measurement has been stopped may be performed with characters or images displayed on a display, sound, and the like, or may be performed with audio or light without language.

### (Clause 4)

A flame atomic absorption spectrophotometer according to Clause 4 is the flame atomic absorption spectrophotometer according to Clause 3, wherein the predetermined information is information recommending the user to perform maintenance of the burner head.

The main cause of the gap occurring in the plate-shaped flame is clogging of the slit of the burner head with impurities contained in the sample. With the flame atomic absorption spectrophotometer according to Clause 4, since the user is notified of the information recommending maintenance of the burner head, the user can perform maintenance to eliminate the clogging in the slit and resume the measurement early.

### (Clause 5)

A flame atomic absorption spectrophotometer according to Clause 5 is the flame atomic absorption spectrophotometer according to any one of Clauses 1 to 4, further including a storage unit configured to store data of the image captured by the image capturing unit.

With the flame atomic absorption spectrophotometer according to Clause 5, since the storage unit stores the data of the images captured by the image capturing unit, evidence indicating that correct analysis was performed in a state where no gap in flame occurred can be preserved.

### REFERENCE SIGNS LIST

- 1: Flame Atomic Absorption Spectrophotometer
- 11: Light Source
- 12: Atomization Unit
- 120: Sample Accommodation Unit
- 121: Sample Nebulizer
- 122: Combustion Gas Source
- 123: Burner Chamber
- 124: Burner Head
- 125: Slit
- 13: Spectroscope
- 14: Detector
- 15: Camera
- 16: Control Unit
- 161: Measurement Control Unit
- 162: Determination Unit
- 163: Display Control Unit
- 164: Absorbance Calculation Unit
- 165: Atomic Quantification Unit
- 17: Storage Unit
- 18: Display Unit
- 911: Measurement Light
- 912: Measurement Light Passing through Flame
- 913: Light Dispersed by Spectroscope
- 92: Plate-shaped Flame
- 921: Side Surface of Plate-shaped Flame
- 922: End Surface of Plate-shaped Flame
- 93: Gap in Flame
- 94: Longitudinal Length of Plate-shaped Flame
- 95: Portion where Flame Does Not Exist on Optical Path of Measurement Light

## Claims

1. A flame atomic absorption spectrophotometer, comprising:
a flame generation unit configured to generate flame by combusting mixed gas of a sample and combustion gas;
a burner head having a slit-shaped opening from which the flame blows out;
a light source configured to emit measurement light having a wavelength band including a predetermined wavelength through a longitudinal path in plate-shaped flame blowing out from the opening;
a measurement unit configured to measure intensity of measurement light that has passed through the plate-shaped flame; and
an image capturing unit configured to capture an image of a side surface of the plate-shaped flame.

2. The flame atomic absorption spectrophotometer according to claim 1, further comprising:
a determination unit configured to acquire an image captured by the image capturing unit during measurement by the measurement unit and determine whether a gap occurs in the plate-shaped flame on a basis of the image; and
a measurement control unit configured to perform an operation of stopping the measurement by the measurement unit when the determination unit determines that a gap occurs in the plate-shaped flame.

3. The flame atomic absorption spectrophotometer according to claim 2, further comprising a notification unit configured to notify a user of predetermined information when the determination unit determines that a gap occurs in the plate-shaped flame.

4. The flame atomic absorption spectrophotometer according to claim 3, wherein the predetermined information is information recommending the user to perform maintenance of the burner head.

5. The flame atomic absorption spectrophotometer according to claim 1, further comprising a storage unit configured to store data of the image captured by the image capturing unit.
